# EUROPÄISCHE PATENTSCHRIFT

(11) **EP 1 801 305 B1**
(45) Veröffentlichungstag und Bekanntmachung des Hinweises auf die Patenterteilung: **25.05.2011**
(21) Anmeldenummer: 06126020.4
(22) Anmeldetag: 13.12.2006
(51) Int. Cl.: E04C 3/08, H02G 3/04, E04C 3/09

(54) **Träger für Installationen im Bereich der Haustechnik und der Industrie**
Support for installations in the domestic and industrial field
Support pour des installations dans le domaine domestique et industriel

(30) Priorität: 22.12.2005 DE 102005000201
(43) Veröffentlichungstag der Anmeldung: 27.06.2007
(73) Patentinhaber: HILTI Aktiengesellschaft, 9494 Schaan (LI)
(72) Erfinder: Hoffmann, Armin, 86899, Landsberg (DE)
(74) Vertreter: Wildi, Roland

(56) Entgegenhaltungen:
- DE-A1- 3 432 259
- FR-A- 911 020

## Beschreibung

Die Erfindung betrifft einen Träger für Installationen im Bereich der Haustechnik und der Industrie, der im Oberbegriff des Patentanspruchs 1 genannten Art, mit einem ersten Traggurt und mit einem in einem Abstand zum ersten Traggurt angeordneten zweiten Traggurt, die über zwei in deren Längserstreckung wellenförmig verlaufende Stäbe über deren Wendebereiche miteinander verbunden sind, wobei der erste Traggurt und der zweite Traggurt jeweils von zwei parallel in einem Abstand zueinander verlaufenden Längsprofilen gebildet sind, wobei die Längsprofile eines Traggurtes über U-förmige Verbindungsprofile miteinander verbunden sind, wobei die Schenkel der U-förmigen Verbindungsprofile an den Längsprofilen festgelegt sind, und wobei die Wendebereiche der wellenförmig verlaufenden Stäbe mit den Längsprofilen in Verbindung stehen.

Für eine flexible Installation von Leitungen, wie Rohren, Lüftungskanälen, Elektrokabeltrassen und dergleichen, im Bereich der Haustechnik oder der Industrie werden heutzutage oftmals aus Blech gefertigte Montageschienen eingesetzt. Diese Montageschienen weisen beispielsweise einen C-förmigen Querschnitt auf, wobei der offene Bereich der Montageschiene der Befestigung z. B. mittels so genannten Schienenmuttem von Gewindestangen dient, an denen die Leitungen aufgeständert oder abgehängt werden.

Für eine formschlüssige Fixierung solcher Befestigungselemente an einer C-förmigen Montageschiene weisen diese innerhalb des offenen Bereichs eine Verzahnung auf, die aus herstellungstechnischen Gründen nur an den freien Blechkanten ausreichend tief eingeprägt beziehungsweise eingerollt werden kann.

Über spezielle Verbindungswinkel sind diese Montageschienen untereinander zu ebenen oder räumlichen Tragkonstruktionen zusammenbaubar. Zudem weisen solche Montageschienen häufig Durchführöffnungen im Bereich des Bodenabschnitts für eine direkte Befestigung der Montageschiene an einer Wand oder Decke beispielsweise mittels eines Dübels auf.

Diese Montageschienen haben sich in der Praxis bewährt, weisen jedoch den Nachteil auf, dass nur auf einer Seite der Montageschiene Anbindemöglichkeiten vorhanden sind. Da es sich bei einer C-förmigen Montageschiene um ein offenes Profil handelt, weist diese zudem im Gegensatz zu einem geschlossenen Profil eine wesentlich schlechtere Torsionssteifigkeit auf.

Es sind deshalb so genannte Doppel-C-Profilschienen bekannt, die beispielsweise aus zwei miteinander vernieteten oder verschweissten C-förmigen Montageschienen gebildet sind und zwei einander gegenüberliegende Anbindemöglichkeiten bieten, so dass eine Rohrleitung ober- und unterhalb der Doppel-GProfilschiene befestigt werden kann. Wie C-förmige Montageschienen stellen auch die Doppel-C-Profilschienen bezüglich des Tragverhaltens einen Kompromiss zwischen den Möglichkeiten für die Befestigungen und der Steifigkeit des Profils dar. Des Weiteren weisen die Doppel-C-Profilschienen ein verhältnismässig hohes Eigengewicht pro Laufmeter auf, benötigen für die Zahl der Befestigungsmöglichkeiten verhältnismässig viel Material und sind zudem aufwändig in der Herstellung.

Aus der GB 1 358 261 ist ein Träger für Betonschalungen bekannt, der einen ersten Traggurt sowie einen parallel in einem Abstand zum ersten Traggurt angeordneten zweiten Traggurt aufweist, die über zwei in deren Längserstreckung wellenförmig verlaufende Stäbe über deren Wendebereiche miteinander verbunden sind. Dieser Träger weist beispielsweise gegenüber einer C-förmigen Montageschiene oder Doppel-C-Profilschiene ein geringeres Eigengewicht pro Laufmeter auf.

Nachteilig an der bekannten Lösung ist, dass dieser Träger keine Anbindemöglichkeiten zum Abhängen des Trägers oder zum Abhängen und Aufständem von Leitungen aufweist.

Ein gattungsgemässer Träger ist aus der DE 34 32 259 A1 bekannt, wobei dieser Träger alle Merkmale des Oberbegriffs des Anspruchs 1 aufweist. Eine weitere Struktur, bei der zwei Gurte über wellenförmig verlaufende Stäbe verbunden sind, geht aus der FR 911 020 A hervor.

Aufgabe der Erfindung ist es, einen Träger mit variablen Anbindemöglichkeiten entlang der Längserstreckung bei vergleichsweise guten statischen Eigenschaften des Trägers zu schaffen.

Die Aufgabe ist durch die Merkmale des unabhängigen Anspruchs gelöst. Vorteilhafte Weiterbildungen sind in den Unteransprüchen dargelegt.

Gemäss der Erfindung umfasst ein Träger für installationen im Bereich der Haustechnik und der Industrie einen ersten Traggurt und einen in einem Abstand zum ersten Traggurt angeordneten zweiten Traggurt. Der erste Traggurt und der zweite Traggurt sind über zwei in deren Längserstreckung wellenförmig verlaufende Stäbe über deren Wendebereiche miteinander verbunden. Der erste Traggurt und der zweite Traggurt sind jeweils von zwei parallel in einem Abstand zueinander verlaufenden Längsprofilen gebildet. Die Längsprofile eines Traggurtes sind über U-förmige Verbindungsprofile miteinander verbunden. Die Schenkel der U-förmigen Verbindungsprofile sind an den Längsprofilen festgelegt und die Basis der U-förmigen Verbindungsprofile, welche die Schenkel verbindet, ist beabstandet zu den Längsprofilen angeordnet, so dass ein Freiraum zwischen der Basis der U-förmigen Verbindungsprofile und den Längsprofilen geschaffen wird. Die Wendebereiche der wellenförmig verlaufenden Stäbe stehen mit den Längsprofilen in Verbindung.

Der Träger weist eine dreidimensionale Fachwerkträgerstruktur auf, wobei der erste Traggurt vorteilhaft parallel zu dem zweiten Traggurt angeordnet ist. Die U-förmigen Verbindungsprofile umgreifen vorteilhaft die Längsprofile eines Traggurtes, wobei die Verbindungsprofile im Bereich der freien Enden deren Schenkel mit den Längsprofilen beispielsweise über Schweisspunkte verbunden sind. Infolge der beabstandeten Anordnung der Basis, welche die Schenkel der Verbindungsprofile miteinander verbindet, zu den Längsprofilen eines Traggurtes wird ein Freiraum zwischen diesen geschaffen, der eine Montage einer Schienenmutter mit einem Hintergreifteil und einem Anschlag entlang der Längserstreckung des Trägers analog an einer C-förmigen Montageschiene ermöglicht, wobei der erfindungsgemässe Träger jedoch vorteilhafte statische Eigenschaften und ein verhältnismässig geringes Eigengewicht pro Laufmeter aufweist.

Unter U-förmig wird in diesem Sinne eine Ausgestaltung eines Verbindungsprofils mit zwei Schenkeln verstanden, die jeweils ein freies Ende aufweisen und über eine Basis miteinander verbunden sind. Die Basis kann gerade, gebogen oder auch winklig verlaufen.

Der Abstand der den ersten Traggurt oder auch der den zweiten Traggurt ausbildenden Längsprofile zueinander ist derart gewählt, dass ein Hintergreifteil einer Schienenmutter zwischen diesen hindurchführbar ist und nach Verdrehen derselben die Längsprofile hintergreifen kann, so dass die Schienenmutter an dem Träger verspannbar ist. Mit entsprechend ausgebildeten Unterlegscheiben oder Anschlagelementen sind auch Gewindestangen, Verbindungselemente und dergleichen direkt in den von den Längsprofilen geschaffenen Längsöffnungen des Trägers festlegbar. Zudem bieten die Öffnungen an den Seiten des Trägers zwischen den Traggurten weitere Anbindemöglichkeiten beispielsweise für Gewindestangen, Verbindungselemente und dergleichen. Die offene, von allen Seiten zugängliche Fachwerkträgerstruktur des Trägers ermöglicht ein Verspannen von Kontermuttern von allen Seiten und auch innerhalb des Trägers. Dabei kann nur der erste Traggurt, nur der zweite Traggurt oder beide Traggurte des Trägers für die Anbindung verwendet werden.

Des Weiteren ist infolge der offenen Fachwerkträgerstruktur des Trägers auch die Durchführung von Installationen, wie z. B. Rohrleitungen zwischen dem ersten und zweiten Traggurt möglich, womit die lnstallationen platzsparend direkt unter der Decke befestigbar sind. Der Träger nutzt die maximal zur Verfügung stehende Höhe und hat daher bei einem gegenüber einer C-förmigen Montageschiene vergleichbaren Materialbedarf eine mehrfach höhere Biegesteifigkeit.

Die wellenförmig verlaufenden Stäbe sind im Bereich ihrer Wendebereiche vorteilhaft mit den, den ersten Traggurt und den zweiten Traggurt ausbildenden Längsprofilen verschweisst. Gleichzeitig gewährleisten die wellenförmig verlaufenden Stäbe einen konstanten Abstand des ersten Traggurtes zu dem zweiten Traggurt bei einer parallel zueinander verlaufenden Anordnung derselben über die gesamte Längserstreckung des Trägers. Die wellenförmig verlaufenden Stäbe werden vorteilhafterweise aus einem geraden Profilstück in die wellenförmige Ausgestaltung gebogen. Vorteilhaft schliessen die benachbarten Abschnitte der wellenförmig verlaufenden Stäbe einen Winkel im Bereich von 60° bis 100° ein, womit ein Träger mit vorteilhaften statischen Eigenschaften geschaffen wird.

Neben einem kontinuierlichen Verlauf der wellenförmigen Ausgestaltung kann diese auch durch eine trapezförmige Ausgestaltung die Wellenform ausbilden. Dabei sind die wellenförmig verlaufenden Stäbe in eine Form gebogen, die aneinandergereihten Trapeze entsprechen. Vorteilhaft schliessen die benachbarten Abschnitte der aneinandergereihten Trapeze einen Winkel im Bereich von 15° bis 35° ein, womit ein Träger mit vorteilhaften statischen Eigenschaften geschaffen wird. Eine weitere wellenförmige Ausgestaltung stellen im Sinne der Erfindung auch im Zickzack verlaufende Stäbe dar.

Die wellenförmig verlaufenden Stäbe sind aussenseitig der Längsprofile mit diesen verbunden, was eine einfache Fertigung des Trägers ermöglicht. Zudem steht bei dieser Ausführungsform des Trägers der gesamte von den Längsprofilen in der quer zu deren Längserstreckung verlaufenden Ebene aufgespannte Raum für Befestigungsmittel zur Verfügung, ohne dass die wellenförmig verlaufenden Stäbe diesen einengen.

Die U-förmigen Verbindungsprofile sind in einem Winkel zur Längserstreckung der Längsprofile an den Traggurten angeordnet, so dass die Längserstreckung der Verbindungsprofile zur Längserstreckung der Längsprofile schneidend ausgerichtet ist. Die Verbindungsprofile weisen eine Längserstreckung auf, die grösser als der Abstand der Längsprofile zueinander ist, so dass die Verbindungsprofile sich mit den Längsprofilen kreuzen und somit eine ausreichend grosse Kontaktfläche zwischen den Verbindungsprofilen und den Längsprofilen zur Schaffung einer sicheren Verbindung zwischen diesen vorhanden ist. Desto flacher der von der Längserstreckung der Verbindungsprofile und der Längserstreckung der Längsprofile eingeschlossene Winkel ist, desto länger muss die Längserstreckung der Verbindungsprofile sein. Die Längserstreckung der Verbindungsprofile ist vorteilhaft derart gewählt, dass die Längsprofile eines Traggurtes von den Schenkeln der U-förmigen Verbindungsprofile aussenseitig, bezogen auf die Anordnung der Längsprofile zueinander, umgriffen werden.

Vorzugsweise sind die U-förmigen Verbindungsprofile senkrecht zur Längserstreckung der Längsprofile ausgerichtet, so dass zwischen diesen ein ausreichender Freiraum zur Anbindung von Gewindestangen, Verbindungselemente und dergleichen vorhanden ist. Zudem bleibt ein solcher Träger auch nach dem Ablängen auf eine gewünschte Länge weiterhin stabil.

Bevorzugt bilden die Längsprofile in einer quer zu deren Längserstreckung verlaufenden Ebene Eckpunkte eines Rechtecks. Der Träger kann in verschiedenen Ausrichtungen angeordnet werden und bietet dabei weiterhin eine Vielzahl von Anbindemöglichkeiten.

In einer besonders vorteilhaften Ausführungsform des Trägers bilden die Längsprofile in der quer zu deren Längserstreckung verlaufenden Ebene Eckpunkte eines Quadrats. In dieser vorteilhaften Ausführungsform des Trägers können beim ersten Traggurt, beim zweiten Traggurt und sogar seitlich zwischen diesen die gleichen Befestigungsmittel, wie z. B. Schienenmuttern, zur Befestigung z. B. einer Leitung an dem Träger oder zum Abhängen des Trägers verwendet werden.

Mit einer einfachen Verbindungseinrichtung lassen sich mehrere Träger mit einem rechteckigen oder quadratischen Querschnitt leicht zu ebenen und räumlichen Tragkonstruktionen verbinden. Die Verbindungseinrichtung umfasst beispielsweise Befestigungsschrauben und als Anbindeelement einen L-förmigen Winkel mit in einem Winkel zueinander ausgerichteten Schenkeln, die jeweils mit einer Durchführöffnung für die Befestigungsschrauben versehen sind.

Vorzugsweise sind die Basis der U-förmigen Verbindungsprofile des ersten Traggurtes und die Basis der U-förmigen Verbindungsprofile des zweiten Traggurtes einander zugewandt, womit zwischen den, den ersten Traggurt ausbildenden Längsprofilen beziehungsweise zwischen den, den zweiten Traggurt ausbildenden Längsprofilen eine über die gesamte Längserstreckung verlaufende Montageöffnung z. B. für eine Schienenmutter geschaffen wird, in welcher diese eingeführt und entlang derselben die Schienenmutter für eine Positionierung derselben verschiebbar ist. Weiter wird ein Aufnahmeraum beispielsweise für einen Führungsabschnitt eines Anbindeelementes geschaffen, mit welchem zwei Träger miteinander verbindbar sind.

Das Anbindeelement zum Verbinden zweier Träger ist beispielsweise ein mit Sicken versehener L-förmiger Winkel, wobei der Sickenboden bei Anlage des Winkels an dem Träger in den Freiraum zwischen den Längsprofilen eines Traggurtes eindringt. Die Sicken in dem Winkel dienen einerseits als Führungsmittel sowie als Verdrehsicherung an dem Träger und andererseits wird der Winkel durch die Sicken bezüglich der Festigkeitseigenschaften verbessert. Dieser Freiraum kann gleichzeitig auch der Aufnahme eines Vierkantansatzes einer Flachrundschraube dienen, womit die montierte Flachrundschraube beim Verspannen derselben drehgesichert gehalten wird.

Bevorzugt sind die Längsprofile wenigstens eines der Traggurte mit einer Verzahnung versehen, die innenseitig und aussenseitig an den Längsprofilen angeordnet sein kann und eine formschlüssige Verklemmung der Anbindeteile ermöglicht. Vorteilhaft weisen die Hintergreifteile und/oder der Anschlag einer Schienenmutter ebenfalls eine Verzahnung auf, die mit der Verzahnung an den Längsprofilen in Eingriff bringbar ist. Die Verzahnung wird z. B. mit einem Rollierverfahren auf die Längsprofile aufgebracht. Alternativ kann als Längsprofil auch eine Gewindestange verwendet werden, wobei das Gewinde der Gewindestange eine umlaufende Verzahnung für dieses Längsprofil ausbildet.

Vorzugsweise ist wenigstens eines der Längsprofile mit zwei Verzahnungen versehen, wobei die Verzahnungen an zwei einander gegenüberliegenden Seiten der Längsprofile angeordnet sind. Insbesondere wenn ein Hintergreifteil und ein Anschlag einer Schienenmutter ebenfalls mit einer Verzahnung versehen sind, lässt sich die Anbindung an den Träger in Längserstreckung des Trägers besser fixieren.

In einer weiteren Ausführungsform der Erfindung weist das Längsprofil jeweils mehr als zwei, beispielsweise vier Verzahnungen auf, die vorteilhaft senkrecht zueinander ausgerichtet sind. Somit sind z. B. auch seitliche Befestigungen zwischen den Traggurten beispielsweise mittels Schienenmuttern oder entsprechend ausgebildeten Unterlegscheiben beziehungsweise Anschlägen formschlüssig an dem Träger festlegbar.

Bevorzugt fluchten die wellenförmig verlaufenden Stäbe in einer quer zur Längserstreckung der Längsprofile verlaufenden Richtung, so dass auch an den Seiten des Trägers, zwischen dem ersten Traggurt und dem zweiten Traggurt zusätzliche Anbindemöglichkeiten gegeben sind und beispielsweise eine Installation, wie eine Rohr- oder Elektroleitung auch zwischen dem ersten Traggurt und dem zweiten Traggurt hindurchführbar ist.

Vorzugsweise weist zumindest eines der Längsprofile einen runden Querschnitt auf. Besonders vorteilhaft weisen alle Längsprofile einen runden Querschnitt auf. Ein solcher Träger ist einfach zu fertigen und ermöglicht eine Vielzahl von Ausgestaltungen um einen grossen Bereich von statischen Anforderungen an den Träger abdecken zu können.

Bevorzugt weist zumindest eines der U-förmigen Verbindungsprofile und/oder zumindest einer der wellenförmig verlaufenden Stäbe einen runden Querschnitt auf. Besonders vorteilhaft weisen alle U-förmigen Verbindungsprofile und/oder wellenförmig verlaufenden Stäbe einen runden Querschnitt auf. Ein solcher Träger ist einfach zu fertigen und ermöglicht eine Vielzahl von Ausgestaltungen um einen grossen Bereich von statischen Anforderungen an den Träger abdecken zu können.

In einer vorteilhaften Ausführungsform der Erfindung weisen die Längsprofile, die U-förmigen Verbindungsprofile sowie die wellenförmig verlaufenden Stäbe jeweils einen runden Querschnitt auf. In einer alternativen Ausführung können auch einzelne Profile einen unrunden Querschnitt aufweisen, wobei z. B. auch eine Kombination von Längsprofilen mit einem polygonalen, wie z. B. einem rechteckigen, Querschnitt und mit einem runden Querschnitt zur Bildung des ersten Traggurtes und/oder des zweiten Traggurtes möglich sind.

Vorteilhaft liegt das Verhältnis der Querschnittsabmessungen der Längsprofile zu den Querschnittsabmessungen der wellenförmig verlaufenden Stäbe im Bereich von 1.1:1 bis 3:1, womit ein Träger mit vorteilhaften statischen Eigenschaften bei einem geringen Eigengewicht pro Laufmeter geschaffen wird.

Weiter vorteilhaft liegt das Verhältnis der Querschnittsabmessungen der Längsprofile zu den Querschnittsabmessungen der Verbindungsprofile im Bereich von 1:1.1 bis 1:3.0, womit ein Träger mit vorteilhaften statischen Eigenschaften bei einem geringen Eigengewicht pro Laufmeter geschaffen wird.

Die Längsprofile, die Verbindungsprofile und/oder die wellenförmig verlaufenden Stäbe sind vorteilhaft aus einem Draht gebildet. Für eine einfache Fertigung des Trägers werden vorteilhaft für die wellenförmig verlaufenden Stäbe und die Verbindungsprofile Profile oder Drähte mit den gleichen Querschnittsabmessungen und/oder mit der gleichen Querschnittsausgestaltung verwendet.

Anstelle von geschweissten Verbindungen können die Längsprofile, die Verbindungsprofile und die wellenförmig verlaufenden Stäbe auch miteinander verlötet oder verklebt sein.

Als Ausgangsmaterial für die Profile oder die Drähte wird vorteilhaft Metall verwendet. In Abhängigkeit von dem Ort der Anwendung kommt beispielsweise ein rostfreier Stahl oder Aluminium als Ausgangsmaterial für die Profile oder die Drähte zur Anwendung. Alternativ können auch Profile oder Drähte aus einem Kunststoff oder aus einem Kohlenstofffaserverstärkten Kunststoff zur Herstellung des Trägers verwendet werden.

Die Erfindung wird nachstehend anhand eines Ausführungsbeispiels näher erläutert. Es zeigen:
- Fig. 1: Eine Ansicht eines erfindungsgemässen Trägers in der Perspektive;

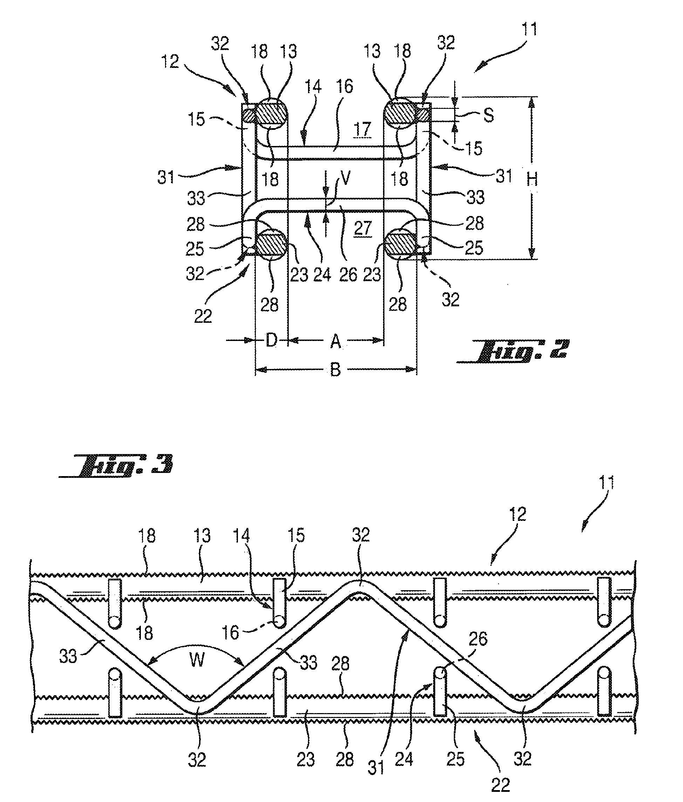

- Fig. 2: einen Schnitt entlang der Linie II-II in Fig. 1; und
- Fig. 3: eine Seitenansicht des erfindungsgemässen Trägers.

Grundsätzlich sind in den Figuren gleiche Teile mit den gleichen Bezugszeichen versehen.

Der in den Figuren dargestellte Träger 11 für Installationen im Bereich der Haustechnik und der Industrie umfasst einen ersten Traggurt 12 und einen parallel in einem Abstand zum ersten Traggurt 12 angeordneten zweiten Traggurt 22. Der erste Traggurt 12 und der zweite Traggurt 22 sind über zwei in deren Längserstreckung wellenförmig verlaufende Stäbe 31 über deren Wendebereiche 32 miteinander verbunden. Die benachbarten Abschnitte 23 der wellenförmig verlaufenden Stäbe 21 schliessen einen Winkel W von 80° ein.

Der erste Traggurt 12 ist von zwei parallel in einem Abstand A zueinander verlaufenden Längsprofilen 13 und diese verbindende U-förmige Verbindungsprofile 14 gebildet, wobei die U-förmigen Verbindungsprofile 14 senkrecht zur Längserstreckung der Längsprofile 13 ausgerichtet sind und eine Längserstreckung aufweisen, die grösser als der Abstand A der Längsprofile 13 zueinander ist. Die U-förmigen Verbindungsprofile 14 weisen zwei Schenkel 15 und eine, diese verbindende Basis 16 auf. Die Schenkel 15 umgreifen die Längsprofile 13 und sind mittels Schweisspunkten an diesen festgelegt. Die Basis 16, welche die Schenkel 15 des Verbindungsprofils 14 verbindet, ist zur Schaffung eines Freiraums 17 zum Hintergreifen der Längsprofile 13 beabstandet zu diesen angeordnet. Die Längsprofile 13 sowie die Verbindungsprofile 14 sind aus einem Draht gebildet und weisen jeweils einen runden Querschnitt auf. Auch die wellenförmig verlaufenden Stäbe 31 sind aus einem Draht gebildet und weisen jeweils einen runden Querschnitt auf.

Der zweite Traggurt 22 ist von zwei parallel in einem Abstand A zueinander verlaufenden Längsprofilen 23 und diese verbindende U-förmige Verbindungsprofile 24 gebildet, wobei die U-förmigen Verbindungsprofile 24 senkrecht zur Längserstreckung der Längsprofile 23 ausgerichtet sind und eine Längserstreckung aufweisen, die grösser als der Abstand A der Längsprofile 23 zueinander ist. Die U-förmigen Verbindungsprofile 24 weisen zwei Schenkel 25 und eine, diese verbindende Basis 26 auf. Die Schenkel 25 umgreifen die Längsprofile 23 aussenseitig und sind mittels Schweisspunkten an diesen festgelegt. Die Basis 26, welche die Schenkel 25 verbindet, ist zur Schaffung eines Freiraums 27 zum Hintergreifen der Längsprofile 23 beabstandet zu diesen angeordnet. Die Längsprofile 23 sowie die Verbindungsprofile 24 sind aus einem Draht gebildet und weisen jeweils einen runden Querschnitt auf.

Die Längsprofile 13 bzw. 23 bilden in einer quer zu deren Längserstreckung verlaufenden Ebene Eckpunkte eines Rechtecks beziehungsweise eines Quadrats. Die Breite B des Trägers 11 entspricht in der Abmessung der Höhe H des Trägers 11. Der Abstand A der Längsprofile 13 des ersten Traggurtes 12 und der Abstand A der Längsprofile 23 des zweiten Traggurtes 22 sind aus diesem Grund gleich gross. Die wellenförmig verlaufenden Stäbe 31 fluchten in einer quer zur Längserstreckung der Längsprofile 13 bzw. 23 verlaufenden Richtung und sind aussenseitig der Längsprofile 13 bzw. 23 mit diesen verbunden.

Die Basis 16 der U-förmigen Verbindungsprofile 14 und die Basis 26 der U-förmigen Verbindungsprofile 24 sind einander zugewandt. Die Basis 16 der U-förmigen Verbindungsprofile 14 des ersten Traggurtes 12 ist zur Schaffung des Freiraums 17 an der Seite der jeweils den ersten Traggurt 12 ausbildenden Längsprofile 13 angeordnet, die der den zweiten Traggurt 22 ausbildenden Längsprofile 23 zugewandt ist. Die Basis 26 der U-förmigen Verbindungsprofile 24 des zweiten Traggurtes 22 sind zur Schaffung des Freiraums 27 an der Seite der jeweils den zweiten Traggurt 22 ausbildenden Längsprofile 23 angeordnet, die der den ersten Traggurt 12 ausbildenden Längsprofile 13 zugewandt ist. Der Freiraum 17 sowie der Freiraum 27 bilden eine von aussen zugängliche, über die gesamte Längserstreckung des Trägers 11 verlaufende Montageöffnung zur Anordnung von Schienenmuttern 1 aus.

Die U-förmigen Verbindungsprofile 14 an den, den ersten Traggurt 12 ausbildenden Längsprofilen 13 sowie die U-förmigen Verbindungsprofile 24 an den, den zweiten Traggurt 22 ausbildenden Längsprofilen 23 sind jeweils zwischen den Wendebereichen 32 der wellenförmig verlaufenden Stäbe 31 vorgesehen.

Die Längsprofile 13 des Traggurtes 12 und die Längsprofile 23 des Traggurtes 22 sind jeweils an zwei Seiten der Längsprofile 13 bzw. 23 mit einer Verzahnung 18 bzw. 28 versehen, die einerseits aussenseitig, auf der, dem Längsprofil 23 bzw. 13 abgewandten Seite, und andererseits innenseitig, auf der dem Längsprofil 23 bzw. 13 zugewandten Seite, des jeweiligen Längsprofils 13 bzw. 23 angeordnet ist.

Das Verhältnis des Durchmessers D der Längsprofile 13 bzw. 23 zu dem Durchmesser S der wellenförmig verlaufenden Stäbe 31 beträgt 2:1. Das Verhältnis des Durchmessers D der Längsprofile 13 bzw. 23 zu dem Durchmesser V der U-förmigen Verbindungsprofile 14 bzw. 24 beträgt in diesem Ausführungsbeispiel ebenfalls 2:1.

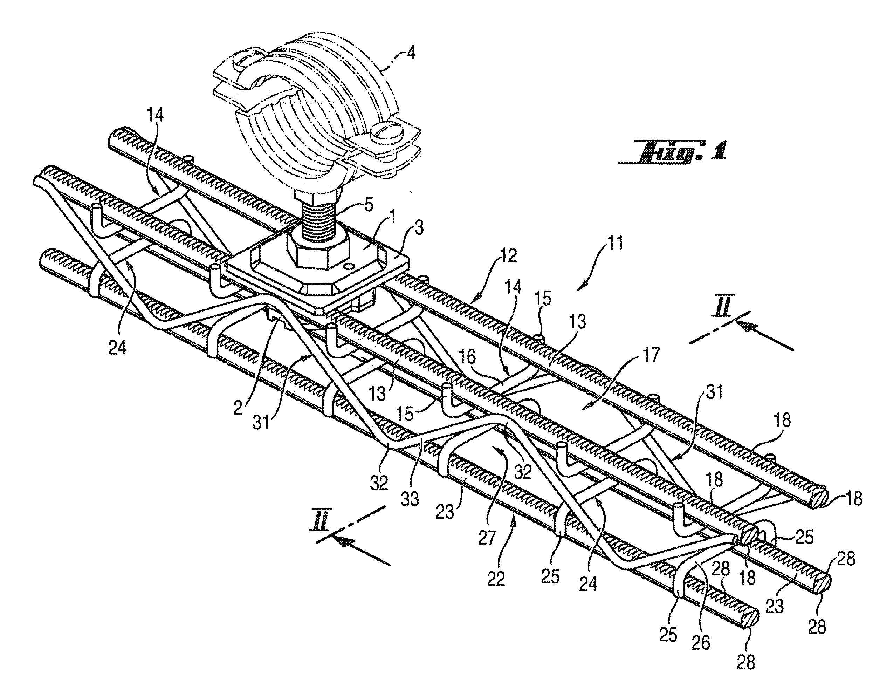

Nachfolgend wird anhand der Figur 1 ein Beispiel für eine mögliche Anbindung an dem Träger 11 beschrieben.

Das Hintergreifteil 2 einer Schienenmutter 1 wird an der gewünschten Stelle an dem erfindungsgemässen Träger 11 zwischen den Längsprofilen 13 des ersten Traggurtes 12 in den Freiraum 17 eingeführt, bis der Anschlag 3 der Schienenmutter 1 mit der Aussenseite der Längsprofile 13 in Anlage kommt. Anschliessend wird das Hintergreifteil 2 zum Hintergreifen der Längsprofile 13 um 90° verdreht. Die Schienenmutter 1 wird für eine exakte Positionierung derselben entlang der Längserstreckung des Trägers 11 verschoben und an der gewünschten Stelle verspannt. Das Hintergreifteil 2 ist mit einer Verzahnung versehen, die beim Verspannen der Schienenmutter 1 mit der Verzahnung 18 an dem Längsprofil 13 in formschlüssigen Eingriff kommt. An der Schienenmutter 1 ist zum Aufständern einer Rohrleitung (hier nicht dargestellt) eine Rohrschelle 4 angeordnet, die über eine Gewindestange 5 zu der Schienenmutter 1 beziehungsweise zu dem Träger 11 justierbar ist.

## Patentansprüche

1. Träger für Installationen im Bereich der Haustechnik und der Industrie mit einem ersten Traggurt (12) und mit einem in einem Abstand zum ersten Traggurt (12) angeordneten zweiten Traggurt (22), die über zwei in deren Längserstreckung wellenförmig verlaufende Stäbe (31) über deren Wendebereiche (32) miteinander verbunden sind,
wobei der erste Traggurt (12) und der zweite Traggurt (22) jeweils von zwei parallel in einem Abstand (A) zueinander verlaufenden Längsprofilen (13, 23) gebildet sind,
wobei die Längsprofile (13, 23) eines Traggurtes (12, 22) über U-förmige Verbindungsprofile (14, 24) miteinander verbunden sind,
wobei die Schenkel (15, 25) der U-förmigen Verbindungsprofile (14, 24) an den Längsprofilen (13, 23) festgelegt sind,
und wobei die Wendebereiche (32) der wellenförmig verlaufenden Stäbe (31) mit den Längsprofilen (13, 23) in Verbindung stehen,
**dadurch gekennzeichnet, dass**
die Basis (16, 26) der U-förmigen Verbindungsprofile (14, 24), welche die Schenkel (15, 25) verbindet, beabstandet zu den Längsprofilen (13, 23) angeordnet ist, wodurch ein Freiraum zwischen der Basis (16, 26) der U-förmigen Verbindungsprofile (14, 24) und den Längsprofilen (13, 23) geschaffen wird.

2. Träger nach Anspruch 1, **dadurch gekennzeichnet, dass** die U-förmigen Verbindungsprofile (14, 24) senkrecht zur Längserstreckung der Längsprofile (13, 23) ausgerichtet sind.

3. Träger nach Anspruch 1 oder 2, **dadurch gekennzeichnet, dass** die Längsprofile (13, 23) in einer quer zu deren Längserstreckung verlaufenden Ebene Eckpunkte eines Rechtecks bilden.

4. Träger nach Anspruch 3, **dadurch gekennzeichnet, dass** die Längsprofile (13, 23) in der quer zu deren Längserstreckung verlaufenden Ebene Eckpunkte eines Quadrats bilden.

5. Träger nach einem der Ansprüche 1 bis 4, **dadurch gekennzeichnet, dass** die Basis (16) der U-förmigen Verbindungsprofile (14) des ersten Traggurtes (12) und die Basis (26) der U-förmigen Verbindungsprofile (24) des zweiten Traggurtes (22) einander zugewandt sind.

6. Träger nach einem der Ansprüche 1 bis 5, **dadurch gekennzeichnet, dass** die Längsprofile (13, 23) wenigstens eines der Traggurte (12, 22) mit einer Verzahnung (18, 28) versehen sind.

7. Träger nach Anspruch 7, **dadurch gekennzeichnet, dass** wenigstens eines der Längsprofile (13, 23) mit zwei Verzahnungen (18, 28) versehen ist, wobei die Verzahnungen (18, 28) an zwei einander gegenüberliegenden Seiten der Längsprofile (13, 23) angeordnet sind.

8. Träger nach einem der Ansprüche 1 bis 7, **dadurch gekennzeichnet, dass** die wellenförmig verlaufenden Stäbe (31) in einer quer zur Längserstreckung der Längsprofile (13, 23) verlaufenden Richtung fluchten.

9. Träger nach einem der Ansprüche 1 bis 8 **dadurch gekennzeichnet, dass** zumindest eines der Längsprofile (13, 23), der U-förmigen Verbindungsprofile (14, 24) und/oder der wellenförmig verlaufenden Stäbe (31) einen runden Querschnitt aufweist.

## Claims

1. A support for installations in the fields of domestic technology and industry, comprising a first chord (12) and a second chord (22) disposed at a distance from said first chord (12), the two chords being interconnected by means of two bars (31) at the turning points (32) of said bars (31) which extend in undulating fashion in longitudinal direction,
in which case the first chord (12) and the second chord (22) consist of two longitudinal profiles (13, 23) respectively, which lie parallel to one another at a distance (A) from one another,
the longitudinal profiles (13, 23) of one chord (12, 22) are joined together via U-shaped connecting profiles (14, 24),
the sides (15, 25) of the U-shaped connecting profiles (14, 24) are fixed to the longitudinal profiles (13, 23),
and the turning points (32) of the undulating bars (31) are attached to the longitudinal profiles (13, 23),
**characterized in that**
the base (16, 26) of the U-sliaped connecting profiles (14, 24), which connects the sides (15, 25), is at a distance from the longitudinal profiles (13, 23), thus creating a space between the base (16, 26) of the U-shaped connecting profiles (14, 24) and the longitudinal profiles (13, 23).

2. A support according to Claim 1, **characterized in that** the U-shaped connecting profiles (14, 24) are oriented perpendicular to the longitudinal extension of the longitudinal profiles (13, 23).

3. A support according to Claim 1 or 2, **characterized in that** the longitudinal profiles (13, 23) form the corners of a rectangle in a plane extending at right angles to their longitudinal extension.

4. A support according to Claim 3, **characterized in that** the longitudinal profiles (13, 23) form the corners of a square in the plane extending at right angles to their longitudinal extension.

5. A support according to one of Claims 1 to 4, **characterized in that** the base (16) of the U-shaped connecting profiles (14) of the first chord (12) and the base (26) of the U-shaped connecting profiles (24) of the second chord (22) are turned towards one another.

6. A support according to one of Claims 1 to 5, **characterized in that** the longitudinal profiles (13, 23) of at least one of the chords (12, 22) are provided with a serration (18, 28).

7. A support according to Claim 7, **characterized in that** at least one of the longitudinal profiles (13, 23) is provided with two serrations (18, 28), the serrations (18, 28) being provided on two opposing sides of the longitudinal profiles (13, 23).

8. A support according to one of Claims 1 to 7, **characterized in that** the undulating bars (31) are aligned in a direction extending at right angles to the longitudinal extension of the longitudinal profiles (13, 23).

9. A support according to one of Claims 1 to 8, **characterized in that** at least one of the longitudinal profiles (13; 23), the U-shaped connecting profiles (14, 24) and/or the undulating bars (31) has a round cross-section.

## Revendications

1. Support pour des installations dans le domaine des installations techniques du bâtiment et de l'industrie, comportant une première membrure de support (12) et une seconde membrure de support (22) agencée à une certaine distance de la première membrure de support (12), lesquelles membrures sont reliées l'une à l'autre par deux barres (31) de forme ondulée dans leur extension longitudinale au-dessus de leurs zones de retournement (32),
dans lequel la première membrure de support (12) et la seconde membrure de support (22) sont formées chacune par deux profilés longitudinaux (13, 23) s'étendant parallèlement l'un à l'autre et espacés l'un de l'autre d'une distance (A),
dans lequel les profilés longitudinaux (13, 23) d'une membrure de support (12, 22) sont reliés l'un à l'autre par des profilés de liaison (14, 24) en forme de U,
dans lequel les branches (15, 25) des profilés de liaison en forme de U (14, 24) sont fixées sur les profilés longitudinaux (13, 23),
et dans lequel les zones de retournement (32) des barres de forme ondulée (31) sont assemblées avec les profilés longitudinaux (13, 23),
**caractérisé ce que** la base (16, 26) des profilés de liaison en forme de U (14, 24), laquelle base relie les branches (15, 25), est agencée espacée des profilés longitudinaux (13, 23), en créant ainsi un espace libre entre la base (16, 26) des profilés de liaison en forme de U (14, 24) et les profilés longitudinaux (13, 23).

2. Support selon la revendication 1, **caractérisé en ce que** les profilés de liaison (14, 24) en forme de U sont orientés perpendiculairement à l'extension longitudinale des profilés longitudinaux (13, 23).

3. Support selon la revendication 1 ou 2, **caractérisé en ce que** les profilés longitudinaux (13, 23) forment les sommets d'un rectangle dans un plan s'étendant transversalement par rapport à leur extension longitudinale.

4. Support selon la revendication 3, **caractérisé en ce que** les profilés longitudinaux (13, 23) forment les sommets d'un carré dans le plan s'étendant transversalement par rapport à leur extension longitudinale.

5. Support selon l'une quelconque des revendications 1 à 4, **caractérisé en ce que** la base (16) des profilés de liaison (14) en forme de U de la première membrure de support (12) et la base (26) des profilés de liaison (24) en forme de U de la seconde membrure de support (22) sont dirigées l'une vers l'autre.

6. Support selon l'une quelconque des revendications 1 à 5, **caractérisé en ce que** les profilés longitudinaux (13, 23) d'au moins une des membrures de support (12, 22) sont munis d'une denture (18, 28).

7. Support selon la revendication 7, **caractérisé en ce qu'**au moins un des profilés longitudinaux (13, 23) est muni de deux dentures (18, 28), dans lequel les dentures (18, 28) sont agencées sur deux côtés opposés l'un à l'autre des profilés longitudinaux (13, 23).

8. Support selon l'une quelconque des revendications 1 à 7, **caractérisé en ce que** les barres de forme ondulée (31) sont alignées dans une direction s'étendant transversalement par rapport à l'extension longitudinale des profilés longitudinaux (13, 23).

9. Support selon l'une quelconque des revendications 1 à 8, **caractérisé en ce qu'**au moins un des profilés longitudinaux (13, 23) des profilés de liaison (14, 24) en forme de U et/ou des barres de forme ondulée (31) présente une section transversale circulaire.
